(19) Europäisches Patentamt
European Patent Office
Office européen des brevets

(11) **EP 2 048 061 A1**

(12) **EUROPEAN PATENT APPLICATION**
published in accordance with Art. 153(4) EPC

(43) Date of publication:
**15.04.2009 Bulletin 2009/16**

(21) Application number: **07767618.7**

(22) Date of filing: **26.06.2007**

(51) Int Cl.:
*B62D 6/00* (2006.01)    *B62D 5/04* (2006.01)
*H02K 1/06* (2006.01)    *H02P 6/10* (2006.01)
*B62D 101/00* (2006.01)    *B62D 113/00* (2006.01)
*B62D 119/00* (2006.01)

(86) International application number:
**PCT/JP2007/062812**

(87) International publication number:
**WO 2008/015856 (07.02.2008 Gazette 2008/06)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **31.07.2006 JP 2006208141**

(71) Applicant: **NSK Ltd.**
**Tokyo 141-8560 (JP)**

(72) Inventors:
• **IMAMURA, Yousuke**
  **Gunma 371-8527 (JP)**
• **ONISHI, Koji**
  **Gunma 371-8527 (JP)**

(74) Representative: **Grünecker, Kinkeldey, Stockmair & Schwanhäusser Anwaltssozietät Leopoldstrasse 4 80802 München (DE)**

(54) **ELECTRIC POWER STEERING SYSTEM**

(57) There is provided a three-phase brushless motor 12 having a harmonic component other than a fundamental wave component in an induced electromotive force, and a phase current command value is output by using the induced electromotive force containing the harmonic component and a phase current is supplied to the motor 12 based on the phase current command value. A content of the harmonic component is set based on a skew angle β of the motor 12, and the skew angle β is set to be smaller than a skew angle at which an induced electromotive force has a fundamental wave and is set to be a skew angle at which a cogging torque is equal to or smaller than a target value Tc1. Consequently, it is possible to suppress a torque ripple and to enhance an output performance of the motor without deteriorating a cogging torque performance.

*FIG. 1*

EP 2 048 061 A1

**Description**

TECHNICAL FIELD

The present invention relates to an electric power steering apparatus using a brushless motor having at least three phases in which a harmonic component is superposed on an induced electromotive force, that is, a so-called harmonic motor.

BACKGROUND ART

In recent years, various requests for an increase in a power have given in respect of a performance of an Electric Power Steering apparatus (hereinafter referred to as an EPS) through an increase in a demand of the EPS, an increase in a required thrust which is caused by an increase in a size of an applied vehicle and a request for an enhancement in a rotating followability assuming an emergent avoidability. It is also possible to cope with the request by increasing a size of an electric motor to be used to enhance a torque and a rotation performance or to cause a permanent magnet to have a high magnetic flux. Referring to the former case, there is caused a situation in which a vehicle layout property is deteriorated due to the increase in the size, a cost is increased, and a feeling is deteriorated and a vibration and a noise are changed for the worse due to a deterioration in a cogging torque. Referring to the latter case, moreover, the cost is considerably increased and the vibration and noise are changed for the worse due to a deterioration in a cogging torque performance.

Referring to a column type EPS, particularly, a driver is close to the EPS. For this reason, it is necessary to avoid the change for the worse of the vibration and noise due to the deterioration in the cogging torque as greatly as possible. Moreover, it is necessary to avoid a deterioration in a torque ripple performance because the change for the worse of the vibration and noise and a deterioration in a steering feeling are influenced.

Accordingly, there is required a method of enhancing an output of a motor without increasing a size while having an excellent cogging torque and torque ripple performance.

For the method for solving the problems, there has been known a method capable of increasing a magnetic flux density to generate a high power while reducing a motor cogging torque by setting an upper limit value of a skew angle to be smaller than a theoretical angle θs (= 180 X (the number of magnetic poles of a rotor) / (a least common multiple of the number between the magnetic poles of the rotor and the magnetic poles of a stator)) and setting a lower limit value to be greater than a half of the theoretical angle θs in a permanent magnet type motor including the rotor in which a skew is provided on a boundary line between magnetic poles of a permanent magnet (for example, see Patent Document 1).

Moreover, there has been known a motor driving control apparatus for suppressing a torque ripple of a harmonic motor by applying an energy balance equation to calculate a q-axis current Iq for determining a motor torque based on a current command value Iref, a rotor electrical angle θe, induced electromotive force models eq(θe) and ed(θe), and a d-axis current Id (for example, see Patent Document 2).

As a motor driving control apparatus for controlling a motor having at least three phases, furthermore, there has been known a apparatus for carrying out a control in a state in which a nonlinear element included in a motor control is separated into respective phases, thereby suppressing a torque ripple and a noise and controlling the torque ripple and a motor noise without saturating a motor terminal voltage also in a high speed rotation of the motor (for example, see Patent Document 3).

Patent Document 1 : JP-A-2005-20930 Publication

Patent Document 2 : JP-A-2004-201487 Publication

Patent Document 3 : JP-A-2006-158198 Publication

DISCLOSURE OF THE INVENTION

PROBLEMS TO BE SOLVED

In the permanent magnet type motor described in the Patent Document 1, however, an induced electromotive force waveform is not a sine wave but contains a harmonic component. In the case in which an ordinary sine wave driving method is employed, therefore, a torque ripple is generated so that a steering feeling is deteriorated and a vibration and a noise are changed for the worse.

In the motor driving control apparatus described in the Patent Documents 2 and 3, also in the case in which the harmonic component is contained in the induced electromotive force and an induced electromotive force having a rectangular wave or a pseudo rectangular wave is generated, it is possible to enhance the output of the motor while suppressing the torque ripple. However, a specific method of containing the harmonic component and a cogging torque are not taken into consideration. For this reason, there is a possibility that the motor might not be controlled optimally.

Therefore, it is an object of the invention to clearly provide a method of optimally setting a motor for an EPS motor and to provide a motor capable of enhancing an output performance of the motor while suppressing a torque ripple without deteriorating a cogging torque performance and an electric power steering apparatus using the motor.

MEANS FOR SOLVING THE PROBLEMS

The problem of the invention can be solved by the following structure.

(1) An electric power steering apparatus including:

a brushless motor having at least three phases;
current control unit which supplies a phase current to drive the brushless motor; and
current command value setting unit which determines a command value of the phase current,
wherein the brushless motor has an induced electromotive force waveform containing a harmonic component other than a fundamental wave component.

(2) The electric power steering apparatus according to (1), wherein a content of the harmonic component of the brushless motor is set based on a skew angle of at least one of a rotor and a stator which are components of the brushless motor.

(3) The electric power steering apparatus according to (2), wherein the skew angle is set to be smaller than a skew angle at which the induced electromotive force has a fundamental wave.

(4) The electric power steering apparatus according to (2), wherein the skew angle is set to be a skew angle at which a cogging torque has a predetermined value or less.

(5) The electric power steering apparatus according to (2), wherein the skew angle is set to be a skew angle at which a harmonic component having an order which is equal to or lower than a seventh order is contained in the induced electromotive force.

(6) The electric power steering apparatus according to (1), wherein the current command value setting means utilizes the induced electromotive force of the brushless motor to output each phase current command value.

(7) The electric power steering apparatus according to (1), wherein the current command value setting means includes angle advance control unit which carries out a angle advance control to determine a phase current command value waveform in order to enhance a motor rotating performance with respect to the induced electromotive force waveform.

ADVANTAGE OF THE INVENTION

According to the electric power steering apparatus of the invention, the brushless motor having at least three phases in which a harmonic component other than a fundamental wave component is included in an induced electromotive force is applied and a content of the harmonic component is regulated by the skew angle. Therefore, it is possible to optimally set the motor, for example, to enhance a torque performance of the motor or to hold the cogging torque to be equal to or smaller than a predetermined value. In addition, the phase current command value is calculated based on the induced electromotive force including the harmonic component and the phase current is supplied to the motor based thereon. Consequently, it is possible to obtain an advantage that a torque ripple can be prevented from being caused by a harmonic induced electromotive force.

According to the electric power steering apparatus of the invention, moreover, it is possible to obtain an advantage that a reduction in a size and a weight of the motor can be implemented with the enhancement in the torque performance of the motor and a vehicle loading property can be improved.

BRIEF DESCRIPTION OF THE DRAWINGS

Fig. 1 is a schematic diagram showing a structure of a vehicle according to an embodiment of the invention;
Fig. 2 is a block diagram showing an example of a steering assist control apparatus;
Fig. 3 is a block diagram showing a schematic structure of a control calculating apparatus in Fig. 2;
Fig. 4 is a characteristic chart showing a steering assist current command value calculating map;
Fig. 5 is a block diagram showing a specific structure of a dq-axis command current calculating portion;

Fig. 6 is a characteristic chart showing a d-axis current DC component calculating map;

Fig. 7 is a characteristic chart showing a d-axis current amplitude coefficient calculating map;

Fig. 8 is a view showing an internal structure of a three-phase brushless motor 12;

Fig. 9 is a chart showing a relationship between a skew angle and a cogging torque in a motor and a harmonic content of an induced electromotive force;

Fig. 10 is a chart showing a relationship between the induced electromotive force and a primary component when a harmonic component is contained;

Fig. 11 is a chart showing a comparison between each induced electromotive force waveform and a control current waveform when the harmonic component is contained;

Fig. 12 is a characteristic chart for a motor; and

Fig. 13A is a characteristic chart for the motor in an angle advance control; and

Fig. 13B is a characteristic chart for the motor in an angle advance control.

DESCRIPTION OF THE DESIGNATIONS

| 1 | steering wheel |
| 2 | steering shaft |
| 3 | torque sensor |
| 10 | steering assist mechanism |
| 11 | reduction gear |
| 12 | three-phase brushless motor |
| 20 | steering assist control apparatus |
| 21 | speed sensor |
| 24 | motor driving circuit |
| 25 | FET gate driving circuit |
| 30 | target current setting portion |
| 31 | steering assist current command value calculating portion |
| 32 | electrical angle converting portion |
| 33 | differentiating circuit |
| 34 | d-axis target current calculating portion |
| 34a | d-axis current DC component calculating portion |
| 34b | d-axis amplitude coefficient calculating portion |
| 34c | pseudo q-axis current calculating portion |
| 34d | d-axis current amplitude component calculating portion |
| 34e | d-axis target current calculating portion |
| 35 | induced electromotive force model calculating portion |
| 36 | q-axis target current calculating portion |
| 37 | two-phase / three-phase converting portion |
| 40 | driving voltage control portion |

BEST MODE FOR CARRYING OUT THE INVENTION

An embodiment according to the invention will be described below with reference to the drawings.

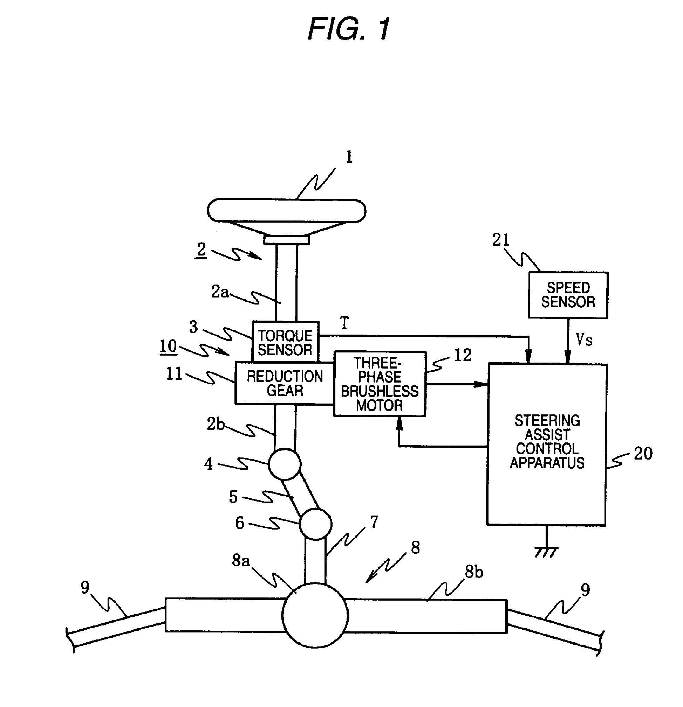

Fig. 1 is a diagram showing a whole structure according to an embodiment in the case in which the invention is applied to an electric power steering apparatus.

In the drawing, the reference numeral 1 denotes a steering wheel. Steering force acting on the steering wheel 1 input from a driver is transmitted to a steering shaft 2 having an input shaft 2a and an output shaft 2b. In the steering shaft 2, the input shaft 2a has one of ends which is coupled to the steering wheel 1 and the other end which is coupled to one of ends of the output shaft 2b through a torque sensor 3.

Then, the steering force transmitted to the output shaft 2b is transmitted to a lower shaft 5 through a universal joint 4, and furthermore, is transmitted to a pinion shaft 7 through a universal joint 6. The steering force transmitted to the pinion shaft 7 is transmitted to a tie rod 9 through a steering gear 8 to steer a rotating and steering wheel which is not shown. The steering gear 8 is constituted in a rack-and-pinion form having a pinion 8a coupled to the pinion shaft 7 and a rack 8b engaged with the pinion 8a and converts a rotating motion transmitted to the pinion 8a into a direct motion through the rack 8b.

A steering assist mechanism 10 for transmitting a steering assist force to the output shaft 2b is coupled to the output shaft 2b of the steering shaft 2. The steering assist mechanism 10 includes a reduction gear 11 coupled to the output shaft 2b and a three-phase brushless motor 12 to be an electric motor coupled to the reduction gear 11 and serving to generate a steering assist force for a steering system.

The torque sensor 3 serves to detect a steering torque given to the steering wheel 1 and transmitted to the input shaft 2a and has such a structure as to convert the steering torque into a torsion angle displacement of a torsion bar (not shown) which is provided between the input shaft 2a and the output shaft 2b and to detect the torsion angle displacement by means of a potentiometer, for example.

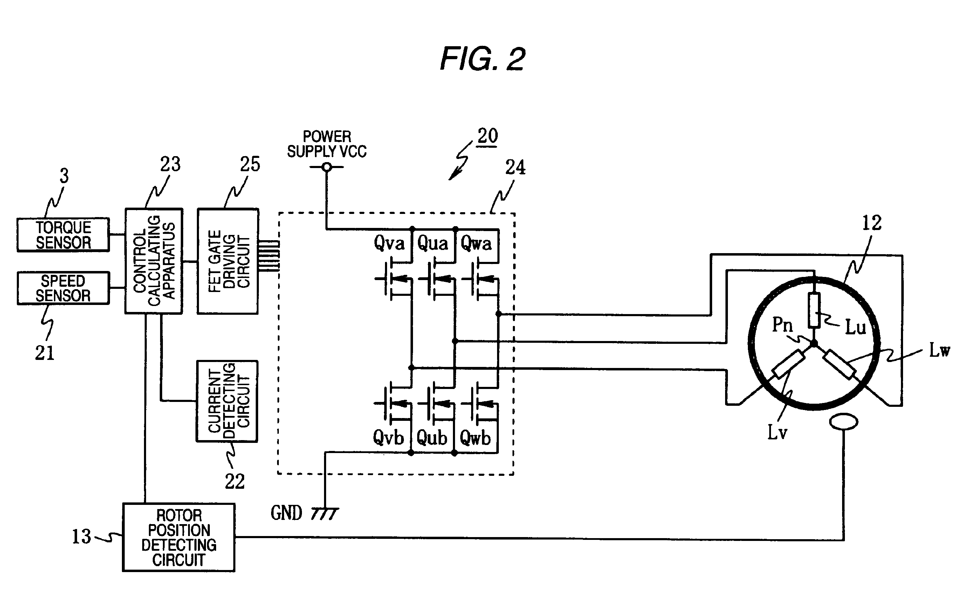

In the three-phase brushless motor 12, as shown in Fig. 2, ends of a U-phase coil Lu, a V-phase coil Lv and a W-phase coil Lw are connected to each other to form a star connection, and the other ends of the coils Lu, Lv and Lw are connected to a steering assist control apparatus 20 so that motor driving currents Iu, Iv and Iw are supplied individually. Moreover, the three-phase brushless motor 12 includes a rotor position detecting circuit 13 constituted by a resolver for detecting a rotating position of a rotor, and a rotary encoder.

The steering assist control apparatus 20 inputs a steering torque T detected by the torque sensor 3 and a speed detection value Vs detected by a speed sensor 21, and a rotor rotating angle θ detected by the rotor position detecting circuit 13, and furthermore, motor driving current detection values Iud, Ivd and Iwd output from a motor current detecting circuit 22 for detecting the motor driving currents Iu, Iv and Iw supplied to the phase coils Lu, Lv and Lw of the three-phase brushless motor 12.

The steering assist control apparatus 20 includes:

a control calculating apparatus 23 constituted by a microcomputer, for example, which calculates a steering assist target current value based on the steering torque T, the speed detection value Vs and the rotor rotating angle θ and outputs motor voltage command values Vu, Vv and Vw, a motor driving circuit 24 constituted by a field effect transistor (FET) for driving the three-phase brushless motor 12; and

an FET gate driving circuit 25 for controlling a gate current of the field effect transistor of the motor driving circuit 24 based on the phase voltage command values Vu, Vv and Vw output from the control calculating apparatus 23.

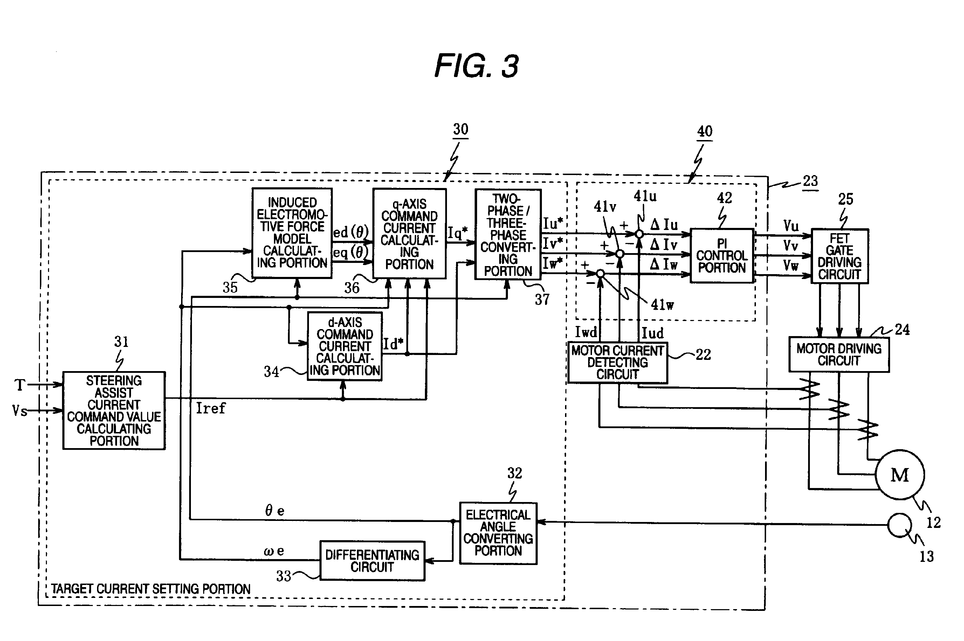

As shown in Fig. 3, the control calculating apparatus 23 includes:

a target current setting portion 30 for determining current command values (target current values) having vector control d and q components by utilizing an excellent characteristic of a vector control and then converting the current command values into phase current command values Iu*, Iv* and Iw* corresponding to exciting coils Lu to Lw and outputting them; and

a driving voltage control portion 40 for carrying out a current feedback processing with the phase current command values Iu*, Iv* and Iw* output from the vector control apparatus command value calculating circuit 30 and the motor current detection values Iud, Ivd and Iwd detected by the motor current detecting circuit 22, thereby controlling a driving voltage.

In Fig. 3, the target current setting portion 30 corresponds to a current command value setting unit, and the driving voltage control portion 40, the motor driving circuit 24 and the FET gate driving circuit 25 correspond to a current control unit.

As shown in Fig. 3, the target current setting portion 30 includes:

a steering assist current command value calculating portion 31 to which the steering torque T detected by the torque sensor 3 and the speed Vs detected by the speed sensor 21 are input and which calculates a steering assist current command value $I_{ref}$ based thereon;

an electrical angle converting portion 32 for converting the rotor rotating angle θ detected by the rotor position detecting circuit 13 into an electrical angle θe;

a differentiating circuit 33 for differentiating the electrical angle θe output from the electrical angle converting portion 32 to calculate an electrical angular velocity $\omega_e$;

a d-axis target current calculating portion 34 for calculating a d-axis target current Id* based on the steering assist current command value $I_{ref}$ and the electrical angular velocity $\omega_e$;

an induced electromotive force model calculating portion 35 for calculating a d-axis EMF component $e_{d0}$ ($= e_d/\omega_e = e_{dAC0} \sin(\theta e)$) and a q-axis EMF component $e_{q0}$ ($= eq/\omega_e = Eq_{DC0} - eq_{AC0} \cos(6\theta e)$) of a d-q-axis induced electromotive force model EMF (Electro-Motive Force) based on the electrical angle θe and the electrical angular velocity $\omega_e$;

a q-axis target current calculating portion 36 for calculating a q-axis target current iq* based on the d-axis EMF component $e_{d0}$ and the q-axis EMF component $e_{q0}$ which are output from the induced electromotive force model calculating portion 35, the d-axis target current id* output from the d-axis target current calculating portion 34 and the steering assist current command value $I_{ref}$ output from the steering assist current command value calculating portion 31; and

a two-phase / three-phase converting portion 37 for converting the d-axis target current id* output from the d-axis target current calculating portion 34 and the q-axis target current iq* output from the q-axis target current calculating portion 36 into the three-phase current command values Iu*, Iv* and Iw*.

The target current setting portion 30 calculates the d-axis target current Id* to be driven at a frequency which is six times as great as one cycle of the electrical angle in an opposite phase to a q-axis current based on the steering assist current command value $I_{ref}$, the electrical angle θe, the electrical angular velocity $ω_e$ and motor constant information. The target current setting portion 30 also calculates the q-axis target current Iq* for determining a motor torque from the steering assist current command value $I_{ref}$, the electrical angle θe, the dq-axis EMF component $e_{d0}$ (θe) and $e_{q0}$ (θe) and the d-axis target current Id* based on a constant torque equation to be described below which applies an energy balance equation of the motor.

The constant torque equation is a relational equation expressed in the following equation (1) using induced electromotive forces ed and eq of the dq axis.

$$T_{\omega m} = (2/3) K_t i_{ref} \omega_m$$

$$= i_u e_u + i_v e_v + i_w e_w = I_q e_q + I_d e_d \quad \cdots\cdots\cdots (1)$$

wherein T represents a motor torque, $ω_m$ represents a motor machine angular velocity, $K_t$ represents a motor torque constant, $i_{ref}$ represents a motor torque command current, $i_u$ represents a U-phase current, $i_v$ represents a V-phase current, $i_w$ represents a W-phase current, $e_u$ represents a U-phase induced electromotive force (EMF), $e_v$ represents a V-phase induced electromotive force (EMF), $e_w$ represents a W-phase induced electromotive force (EMF), $I_q$ represents a q-axis current, $I_d$ represents a d-axis current, $e_q$ represents a q-axis induced electromotive force (EMF), and $e_d$ represents a d-axis induced electromotive force (EMF).

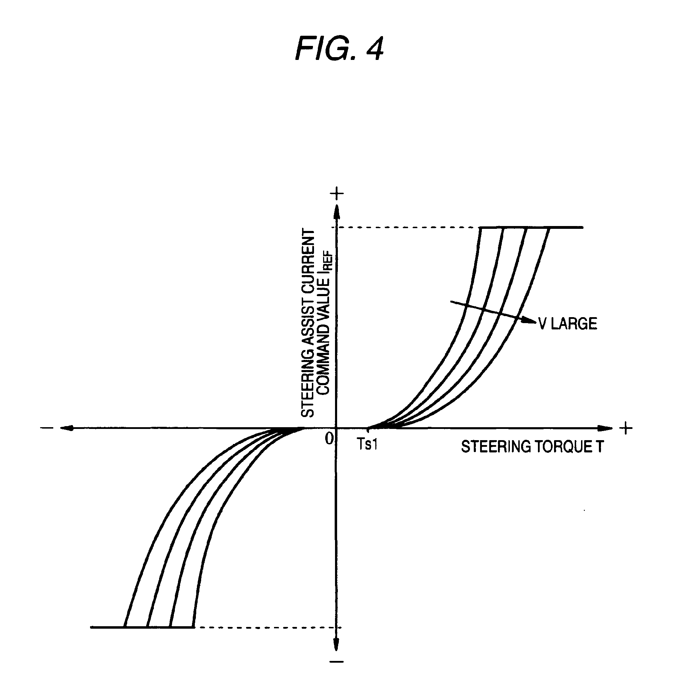

The steering assist current command value calculating portion 31 calculates the steering assist current command value $I_{ref}$ by referring to a steering assist current command value calculating map shown in Fig. 4 based on the steering torque T and the speed $V_s$. The steering assist current command value calculating map is constituted by a characteristic chart shown in a parabolic curve in which abscissas indicates the steering torque T and ordinates indicates the steering assist current command value $I_{ref}$, and the speed Vs is set to be a parameter.

The steering assist current command value $I_{ref}$ maintains "0" while the steering torque T is "0" to a set value Ts1 in the vicinity thereof. The steering assist current command value $I_{ref}$ is set to be first increased comparatively gently with respect to an increase in the steering torque T when the steering torque T exceeds the set value Ts1, and to be steeply increased with respect to a further increase in the steering torque T. The characteristic curve is set to have a gradient reduced in accordance in an increase in a speed.

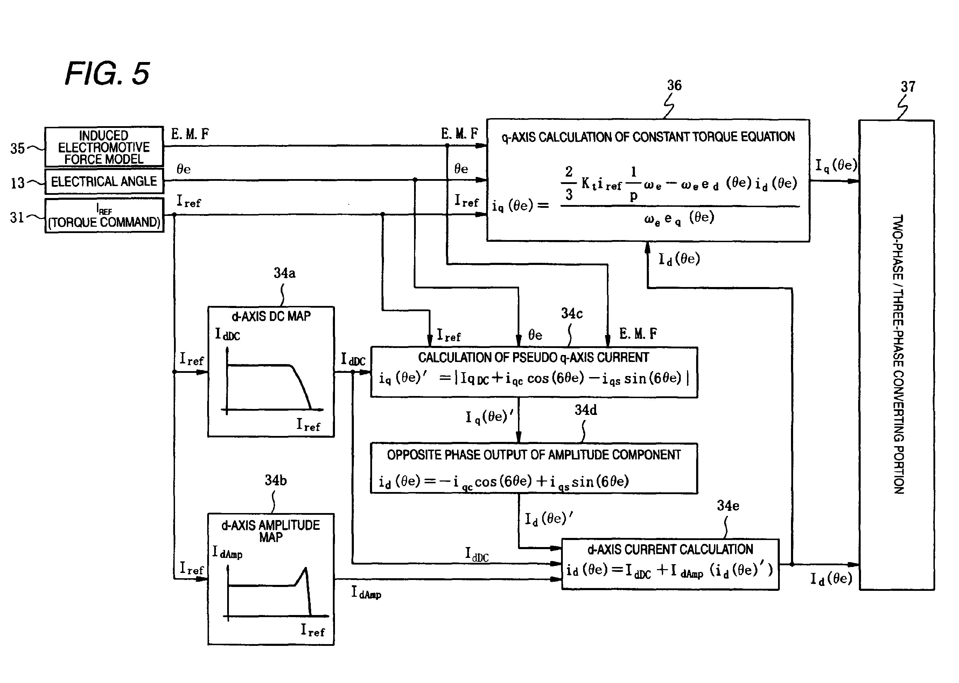

As shown in Fig. 5, moreover, the d-axis target current calculating portion 34 inputs the steering assist current command value $I_{ref}$ output from the steering assist current command value calculating portion 31, the electrical angle θe output from the electrical angle converting portion 32, and a DC component $E_{qDC0}$ (= $ω_e E_{qDC0}$ = $E_{qDC}$) of the q-axis EMF, an amplitude component $e_{qAC0}$ ($ω_e e_{qAC0}$ = $e_{qAC}$) of the q-axis EMF and an amplitude component $e_{dAC0}$ ($ω_e e_{dAC0}$ = $e_{dAC}$) of the d-axis EMF which are represented by induced electromotive force models input from the induced electromotive force calculating portion 35 which will be described below.

The d-axis target current calculating portion 34 includes:

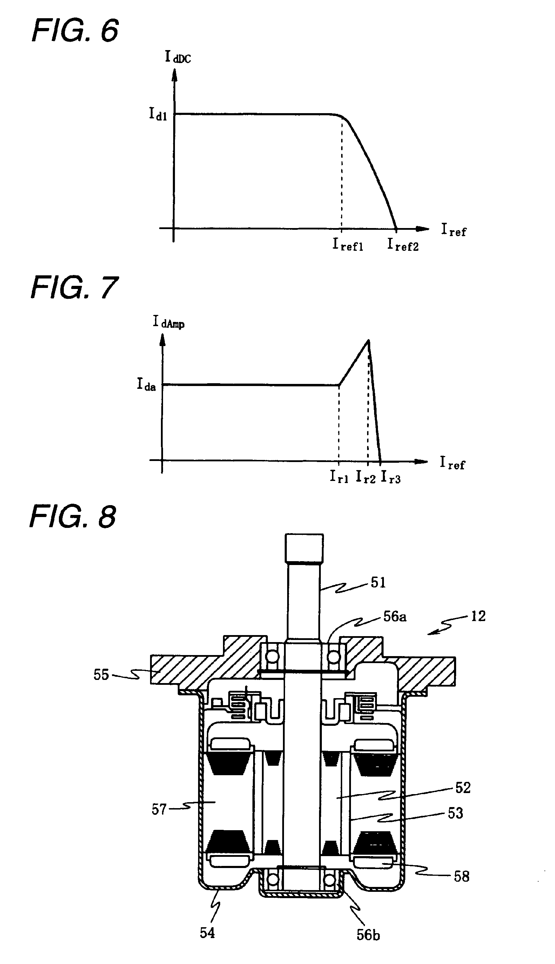

a d-axis current DC component calculating portion 34a to be angle advance control unit which calculates a DC component $I_{dDC}$ of a temporally d-axis current by referring to a d-axis DC component calculating map shown in Fig. 6 based on the steering assist current command value $I_{ref}$ which is input;

a d-axis amplitude coefficient calculating portion 34b for calculating an amplitude coefficient $I_{dAmp}$ for determining an amplitude of the d-axis current by referring to a d-axis amplitude coefficient calculating map shown in Fig. 7 based on the steering assist current command value $I_{ref}$ which is input in the same manner;

a pseudo q-axis current calculating portion 34c for calculating a pseudo q-axis current $i_q$ (θe)' based on the steering assist current command value $I_{ref}$, the rotor electrical angle θe and the induced electromotive force model EMF;

a d-axis current amplitude component calculating portion 34d for calculating a d-axis opposite phase current component $I_d$(θe)' for calculating an opposite phase part of the amplitude component of the d-axis current based on the pseudo q-axis current $i_q(\theta e)'$ calculated by the pseudo q-axis current calculating portion 34c; and
a d-axis target current calculating portion 34e for calculating a d-axis target current $I_d(\theta e)$ based on the d-axis DC component $I_{dDC}$, the d-axis amplitude coefficient $I_{dAmp}$ and the d-axis opposite phase component $I_d(\theta e)'$.

In the d-axis DC component calculating map to which reference is made by the d-axis DC component calculating portion 34a, a characteristic line is set in such a manner that:

the d-axis DC component $I_{dDC}$ takes a constant value Id1 while the steering assist current command value $I_{ref}$ is "0" to a predetermined value $I_{ref1}$,
the d-axis DC component $I_{dDC}$ is gradually decreased from the constant value Id1 corresponding to an increase in the steering assist current command value $I_{ref}$ when the steering assist current command value $I_{ref}$ exceeds the predetermined value $I_{ref1}$, and
the d-axis DC component $I_{dDC}$ is "0" when the steering assist current command value $I_{ref}$ reaches a maximum value $I_{ref2}$ as shown in Fig. 6.

Moreover, the d-axis amplitude coefficient calculating map to which reference is made by the d-axis amplitude coefficient calculating portion 34b has a characteristic line set as shown in Fig. 7. The d-axis amplitude coefficient calculating map shows, as a characteristic chart, a relationship between the steering assist current command value $I_{ref}$ and the d-axis amplitude coefficient $I_{dAmp}$ which is obtained when a simulation is carried out to maximize a motor output at each rotating speed.

Furthermore, the pseudo q-axis current calculating portion 34c carries out the following calculation to calculate a pseudo q-axis current $I_d(\theta e)'$ in consideration of normal and reverse rotations of the motor based on the steering assist current command value $I_{ref}$ which is output from the steering assist current command value calculating portion 31, the rotor electrical angle $\theta e$ which is output from the electrical angle converting portion 32, the DC component $E_{qDC0}$ (= $\omega_e Eq_{DC0} = E_{qDC}$) of the q-axis EMF, the amplitude component $e_{qAC0}$ ($\omega_e e_{qAC0} = e_{qAC}$) of the q-axis EMF and the amplitude component $e_{dAC0}$ ($\omega_e e_{dAC0} = e_{dAC}$) of the d-axis EMF which are represented by the induced electromotive force model input from the induced electromotive force calculating portion 35 which will be described below, and the d-axis DC component $I_{dDC}$ which is calculated by the d-axis DC component calculating portion 34a.

$$i_q(\theta e)' = | I_{qDC} + i_{qc}\cos(6\theta e) - i_{qs}\sin(6\theta e)| \quad \cdots \quad (2)$$

This is based on the fact that the d-axis current $i_d(\theta e)$ and the q-axis current $i_q(\theta e)$ can approximate to each other in the following equations (3) and (4) by utilizing a six-order harmonic component which is dominant in the vibration component of the q-axis current $i_q(\theta e)$.

$$i_d(\theta e) = I_{dDC} + i_{dc}\cos(6\theta e) + i_{ds}\sin(6\theta e) \quad \cdots\cdots\cdots \quad (3)$$

$$i_q(\theta e) = I_{qDC} + i_{qc}\cos(6\theta e) - i_{qs}\sin(6\theta e) \quad \cdots\cdots\cdots \quad (4)$$

Note that:

$$I_{qDC} = 2K_t i_{ref} / 3pE_{qDC0'}$$

$$i_{qc} = 2K_t i_{ref} e_{qAC0} / 3pE_{qDC0'}{}^2$$

$$i_{qs} = I_{dDC}e_{qAC0} / E_{qDC0}$$

Furthermore, the d-axis current amplitude component calculating portion 34d inverts a sign of an AC component excluding the q-axis DC part $I_{qDC}$ of a first term on a right side in the equation (4) and calculates an opposite phase output $i_d (\theta e)$' of the amplitude component based on the following equation (5).

$$i_d(\theta e)' = - (i_{qc}\cos(6\theta e) - i_{qs}\sin(6\theta e)) \quad \cdots\cdots\cdots \quad (5)$$

Furthermore, the d-axis current calculating portion 34e carries out a calculation in the following equation based on the d-axis DC component $I_{dDC}$, the d-axis amplitude coefficient $I_{dAmp}$, and the opposite phase component $i_d (\theta e)$' of the d-axis amplitude component, thereby calculating the d-axis current command value $i_d (\theta e)$.

$$i_d(\theta e) = I_{dDC} - I_{dAmp} (i_{qc}\cos(6\theta e) - i_{qs}\sin(6\theta e))$$

$$\cdots\cdots\cdots \quad (6)$$

In other words, the d-axis current command value $i_d (\theta e)$ is defined on the assumption that a driving operation is carried out in an opposite phase to the q-axis current $i_q (\theta e)$.

Moreover, the q-axis target current calculating portion 36 calculates the q-axis current command value $i_q (\theta e)$ based on a d-axis current equation obtained by changing the constant torque conditional expression indicated as the equation (1) on the basis of the d-axis current command value $i_d (\theta e)$, the electrical angular velocity $\omega_e$, the d-axis EMF component $e_{d0} (\theta e)$, and the q-axis EMF component $e_{q0}(\theta e)$.

The voltage control portion 40 in Fig. 3 includes:

subtracters 41u, 41v and 41w for subtracting the motor phase current detection values Iud, Ivd and Iwd flowing the phase coils Lu, Lv and Lw which are detected by the current detecting circuit 22 from the current command values Iu*, Iv* and Iw* supplied from the target current setting portion 30 to calculate phase current errors ΔIu, ΔIv and ΔIw, and a PI control portion 42 for carrying out a proportional plus integral control for the phase current errors ΔIu, ΔIv and ΔIw thus obtained, thereby calculating command voltages Vu, Vv and Vw.

Then, the command voltages Vu, Vv and Vw output from the PI control portion 42 are supplied to an FET gate driving circuit 25.

As shown in Fig. 2, a motor driving circuit 24 has an inverter structure in which switching elements Qua, Qub, Qva, Qvb, Qwa and Qwb connected in series corresponding to the phase coils Lu, Lv and Lw and constituted by an N channel MOSFET are connected in parallel. A node of the switching elements Qua and Qub, a node of the switching elements Qva and Qvb and a node of the switching elements Qwa and Qwb are connected on an opposite side to a neutral point Pn of the phase coils Lu, Lv and Lw.

A PWM (pulse width modulation) signal output from the FET gate driving circuit 25 is supplied to gates of the switching elements Qua, Qub, Qva, Qvb, Qwa and Qwb constituting the motor driving circuit 24.

Fig. 8 is a sectional view showing an internal structure of the three-phase brushless motor 12. In the three-phase brushless motor 12, a rotor 52 is attached to an output shaft 51 for transmitting a torque and a rotation to an outside and a magnet 53 for generating the torque is attached to an outer periphery of the rotor 52. The output shaft 51 is supported in an axial direction by bearings 56a and 56b which are attached to a case 54 and a flange 55, and can be rotated freely in a rotating direction.

A stator 57 is disposed in the case 54 and a coil 58 is wound around the stator 57, and electric power is supplied to cause the stator 57 to generate an armature magnetomotive force and to cause the rotor 52 to generate a rotating force by a rotor magnetomotive force. A motor connecting method is a star connection, and a skew is applied to at least one of the magnet 53 attached to the rotor 52 and the stator 57.

Although the skew includes a rotor (magnet) skew and a stator skew, any of the forms may be employed in the embodiment. The rotor (magnet) skew can be implemented by carrying out a polarization or shifting a magnet position of the rotor stepwise in an axial direction. Therefore, a process can be simplified. On the other hand, the stator skew features that it can be implemented by shifting a position of a steel plate in a lamination every lamination of a stator core and a smooth skew can be thus implemented, and furthermore, precision in a skew angle is enhanced because the skew angle is determined by mechanical precision in a position.

In the embodiment, it is assumed that a harmonic component is contained in the induced electromotive force of the three-phase brushless motor 12 in addition to a fundamental wave component (a sine wave component), and a content of the harmonic component is set based on the skew angle.

It is assumed that the skew angle is set to be smaller than a skew angle at which the induced electromotive force forms a sine wave and to be a skew angle at which a cogging torque is equal to or smaller than a predetermined target value Tc1. Furthermore, it is assumed that the skew angle is set within a range in which a harmonic component having a higher order than a seventh order is not contained in the induced electromotive force as greatly as possible (0.1% or less with respect to the fundamental wave component).

The target value Tc1 is set to be approximately 0.020 [Nm], for example, in order to obtain an excellent cogging torque in a relationship of a noise and a vibration.

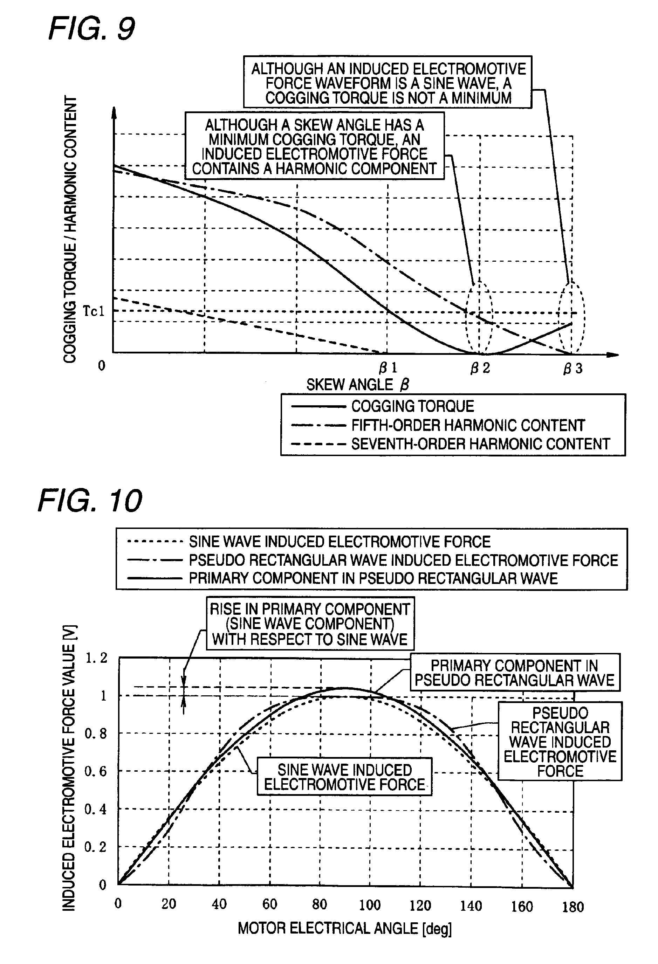

In general, the skew angle, the cogging torque and the induced electromotive force have a relationship shown in Fig. 9. In Fig. 9, an axis of abscissas indicates a skew angle β and an axis of ordinates indicates a harmonic content of the cogging torque or the induced electromotive force. In the chart, a solid line represents the cogging torque, a one-dotted chain line represents a fifth-order harmonic content of the induced electromotive force, and a broken line represents a seventh-order harmonic content of the induced electromotive force.

As shown in Fig. 9, a harmonic component having a seventh-order or more is contained in the induced electromotive force at a smaller angle than a skew angle β1. The cogging torque at the skew angle β1 is approximately 0.020 [Nm] and corresponds to the target value Tc1. Moreover, the cogging torque is a minimum at a skew angle β2 and an induced electromotive force waveform is a sine wave at a skew angle β3.

In the embodiment, accordingly, the skew angle β is set within a range which is greater than β1 and is smaller than β3. Within the range of β1 < β < β3, the cogging torque is equal to or smaller than the target value Tc1.

Next, description will be given to an operation and an advantage according to the embodiment.

When the steering wheel 1 is steered, the steering torque T at that time is detected by the torque sensor 3 and the speed Vs is detected by the speed sensor 21. Then, the detected steering torque T and speed Vs are input to the steering assist current command value calculating portion 31 in the target current setting portion 30 of the control calculating apparatus 23 so that the steering assist current command value calculating portion 31 calculates the steering assist current command value $I_{ref}$ by referring to the steering assist current command value calculating map in Fig. 4.

Thereafter, the steering assist current command value $I_{ref}$ thus calculated is supplied to the d-axis target current calculating portion 34 and the q-axis target current calculating portion 36.

Moreover, the electrical angle θe and the electrical angular velocity $\omega_e$ are supplied to the induced electromotive force model calculating portion 35 to calculate the d-axis EMF component $e_{d0}$ (θe) and the q-axis EMF component $e_{q0}$ (θe), and they are supplied to the pseudo q-axis current calculating portion 34c of the d-axis current calculating portion 34 and the q-axis current calculating portion 36.

In the d-axis current calculating portion 34, therefore, the d-axis DC component calculating portion 34a calculates the d-axis DC component $I_{dDC}$ by referring to the d-axis DC component calculating map of Fig. 6 based on the steering assist current command value $I_{ref}$ and the d-axis amplitude coefficient calculating portion 34b calculates the d-axis amplitude coefficient $I_{dAmp}$ by referring to the q-axis amplitude coefficient calculating map of Fig. 7 based on the steering assist current command value $I_{ref}$.

Furthermore, the pseudo q-axis current calculating portion 34c calculates the pseudo q-axis current $i_q(θe)'$ based on the equation (2) and the d-axis current amplitude component calculating portion 34d subsequently calculates the d-axis opposite phase component $'i_d(θe)'$ based on the equation (5).

Then, the d-axis target current calculating portion 34e carries out the calculation in the equation (6) to calculate the d-axis target current $i_d(θe)$, and the d-axis target current $i_d(θe)$ thus calculated is supplied to the q-axis current calculating portion 36 and the two-phase / three-phase converting portion 37.

The q-axis current calculating portion 36 calculates the q-axis target current $i_q(θe)$ which does not generate a torque fluctuation by using the d-axis target current $i_d(θe)$ calculated by the d-axis target current calculating portion 34e and supplies the q-axis target current $i_q(θe)$ to the two-phase / three-phase converting portion 37.

Thus, the d-axis target current $i_d(θe)$ and the q-axis target current $i_q(θe)$ have opposite phases which are shifted from each other by approximately 180 degrees, and the d-axis voltage Vd and the q-axis voltage Vq also have opposite phases which are shifted from each other by approximately 180 degrees.

Then, the d-axis target current $i_d(θe)$ and the q-axis target current $i_q(θe)$ are converted into the three-phase current command values Iu*, Iv* and Iw* by the two-phase / three-phase converting portion 37, and the voltage control portion 40 carries out a current feedback processing with the three-phase current command values Iu*, Iv* and Iw* and the motor current detection values Iud, Ivd and Iwd detected by the motor current detecting circuit 22, thereby calculating the phase voltage commands Vu, Vv and Vw. Thereafter, PWM signals PWMua to PWMwb which are calculated based on the phase voltage commands Vu, Vv and Vw are output to the FET gate driving circuit 25.

The FET gate driving circuit 25 controls a gate current of the field effect transistor of the motor driving circuit 24 based on the PWM signals. As a result, a torque generated by the three-phase brushless motor 12 is converted into a rotating torque of the steering shaft 2 through the reduction gear 11 so that a steering force of a driver is assisted.

The three-phase brushless motor 12 according to the embodiment sets the skew angle β so as to cause the induced electromotive force to contain a harmonic component in addition to a fundamental wave component (a sine wave component). At this time, the skew angle β is set to be smaller than an angle β3 at which the induced electromotive force forms a sine wave.

When the skew angle β is set to be smaller than an angle at which a sine wave induced electromotive force is obtained, a primary component (a fundamental wave component) of a coil interphase induced electromotive force is raised as compared with the sine wave induced electromotive force as shown in Fig. 10. For an induced electromotive force constant, the primary component (the fundamental wave component) is dominant. Therefore, the induced electromotive force constant is increased with a rise in the primary component (the fundamental wave component) of the interphase induced electromotive force.

A torque relational expression of an electric motor is as follows.

$$T_m = EMF \cdot I_m / \omega_m = K_e I_m = K_t I_m \qquad \cdots\cdots\cdots (7)$$

$T_m$ represents a motor torque, EMF represents a coil interphase induced electromotive force, $\omega_m$ represents a rotating speed of the motor, $I_m$ represents a motor phase current, $K_e$ represents an induced electromotive force constant, and $K_t$ represents a motor torque constant.

As shown in the equation (7), the induced electromotive force constant $K_e$ and the motor torque constant $K_t$ have an equal value. When the induced electromotive force constant $K_e$ is increased as described above, therefore, the motor torque constant $K_t$ is also increased so that a torque performance of the motor is enhanced.

By setting the skew angle β to be smaller than the angle β3 at which the induced electromotive force forms the sine wave, thus, it is possible to enhance an output performance of the motor.

As shown in Fig. 9, when the skew angle β is set to be smaller than the angle β3 at which the induced electromotive force forms the sine wave, the harmonic component is contained in the induced electromotive force.

When the harmonic component is contained in the induced electromotive force, a torque ripple is caused by the harmonic component with the use of a sine wave driving method to be generally utilized. The torque ripple causes a deterioration in a noise and a vibration, and a steering feeling. As a motor for an EPS, it is necessary to prevent the torque ripple from being generated.

On the other hand, in the embodiment, there is employed a current control technique for outputting a phase current command value by utilizing an induced electromotive force of a motor which includes a harmonic component by the target current setting portion 30. Consequently, it is possible to prevent the torque ripple from being caused by a harmonic induced electromotive force.

In many cases, the induced electromotive force of the motor is generally set to have the sine wave for an easy control. However, the cogging torque is not always minimized at the skew angle (β = β3) at which the induced electromotive force has the sine wave as shown in Fig. 9. The cogging torque is related to the noise and vibration of the motor. In case of the EPS in which a motor is disposed in a room of a vehicle, for example, a column type EPS, a distance from the driver is small. Therefore, it is necessary to reduce the vibration and noise of the motor as greatly as possible.

In the embodiment, by setting the skew angle β to be smaller than the angle β3 at which the induced electromotive force has the sine wave and setting the skew angle β to be a skew angle (β > β1) at which the cogging torque is equal to or smaller than the target value Tc1, it is possible to produce an advantage which can suppress the noise and vibration of the motor as greatly as possible within such a range as to disregard the noise, vibration and feeling of the EPS in addition to the enhancement in the torque performance.

In the range in which the vibration and noise of the motor is permitted in the column type EPS and an EPS of such a type that a motor is disposed in a vehicle engine room (for example, a pinion type EPS), furthermore, it is possible to set the skew angle to be further smaller than the skew angle at which the cogging is minimized in order to increase a power of the motor. In this case, however, a higher-order harmonic component is contained in the induced electromotive force when the skew angle is reduced.

As described above, in the embodiment, there is used the current control technique for preventing a torque ripple from being caused by a harmonic component of an induced electromotive force. By using the current control technique, a phase current to flow to the motor also contains the harmonic component. For this reason, a phase current waveform is complicated and it is hard to implement a waveform when a frequency of the contained harmonic component exceeds a response frequency of a current control so that it is impossible to effectively suppress the torque ripple.

More specifically, it is hard to generate a current waveform for suppressing the torque ripple in the case in which a harmonic component having a higher order than a seventh order is contained in the induced electromotive force due to a responsiveness of a current control, a delay caused by a filter in a current detection in a control circuit or a responsiveness of an FET or a microcomputer.

On the other hand, in the embodiment, the skew angle β is set to be smaller than the skew angle β3 at which the induced electromotive force has a sine wave within a range in which the harmonic component having a higher order than the seventh order is not contained in the induced electromotive force, that is, β1 < β < β3. Therefore, it is possible to easily generate a current waveform for suppressing the torque ripple, thereby suppressing the torque ripple effectively.

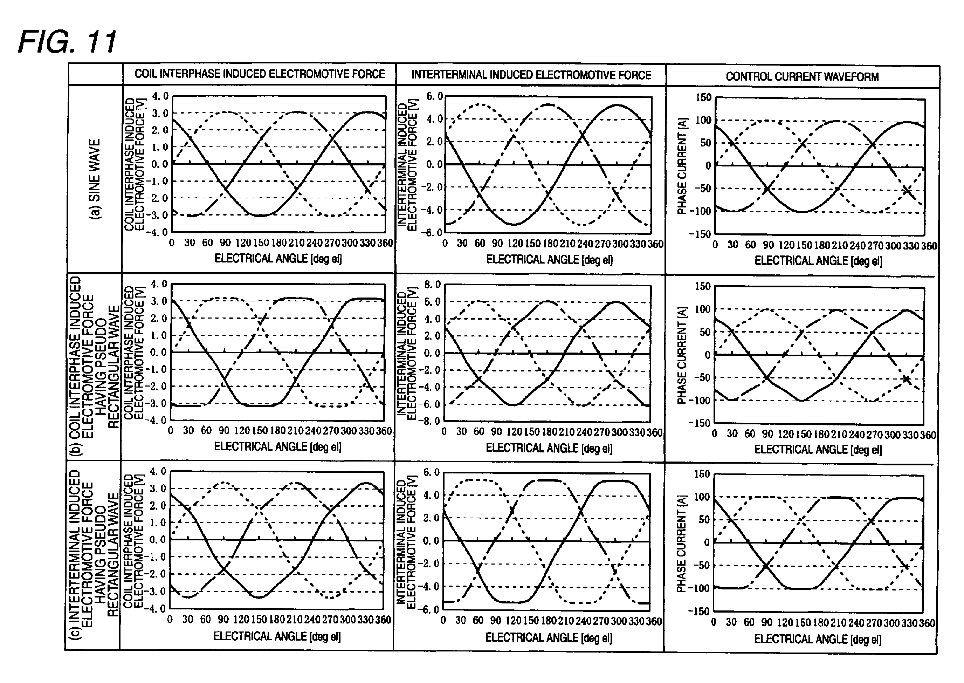

Fig. 11 shows a control current waveform for suppressing the coil interphase induced electromotive force, the interterminal induced electromotive force and the torque ripple in the case in which the skew angle β is set to be smaller than the angle at which the induced electromotive force has the sine wave and the induced electromotive force is caused to contain the harmonic component.

In Fig. 11, (a) shows the case in which the induced electromotive force has the sine wave, (b) shows the case in which the induced electromotive force is caused to contain the harmonic component (the coil interphase induced electromotive force has a pseudo rectangular wave), and (c) shows the case in which the induced electromotive force is caused to contain the harmonic component (an interterminal induced electromotive force has a pseudo rectangular wave).

There are different phases of the harmonic contained in the induced electromotive force in the case in which the skew angle is reduced depending on a relationship of a pole of a motor / a slot, a shape of a stator, a winding method or a type of a magnet, and two types of induced electromotive force waveforms are present as shown in Fig. 11 (b) and (c).

In the case in which the coil interphase induced electromotive force has the pseudo rectangular wave as shown in Fig. 11(b), the interterminal induced electromotive force has a pseudo triangular wave and the control current waveform has a pseudo triangular wave. To the contrary, when the interterminal induced electromotive force has a pseudo rectangular wave as shown in Fig. 11(c), the coil interphase induced electromotive force has a pseudo triangular wave and the control current waveform is a pseudo rectangular wave. In both of the cases, it is apparent that the torque performance of the motor is enhanced through an improvement in a primary component (a fundamental wave component) of the coil interphase induced electromotive force.

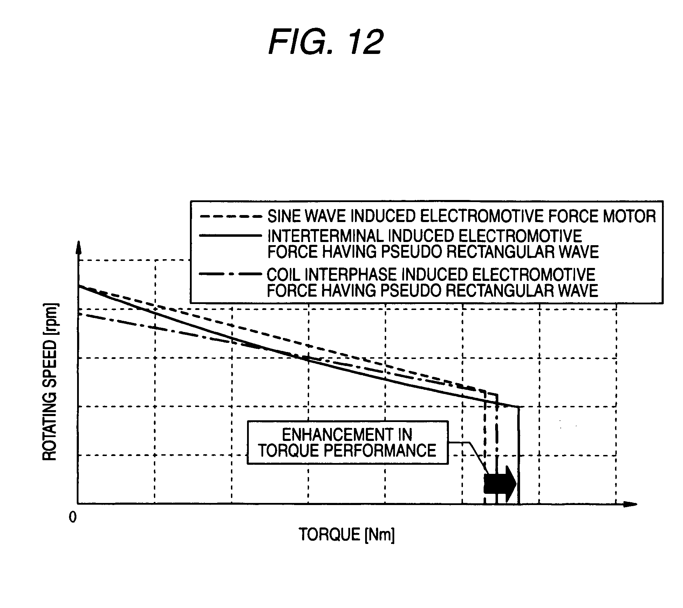

Fig. 12 is a motor characteristic chart showing the case in which the same conformation and the same winding structure are employed and the induced electromotive force is set to have a sine wave and a pseudo rectangular wave. Fig. 12 is a characteristic chart for a motor in which a broken line indicates a sine wave induced electromotive force motor, a solid line indicates a motor in which an interterminal induced electromotive force has a pseudo rectangular wave, and a one-dotted chain line indicates a motor in which a coil interphase induced electromotive force has a pseudo rectangular wave.

As is apparent from Fig. 12, similarly, the motor for the pseudo rectangular wave induced electromotive force shown in the solid line and the one-dotted chain line has a torque performance enhanced more greatly than the motor for the sine wave induced electromotive force shown in the broken line, and an EPS system having a high torque is provided in the same conformation.

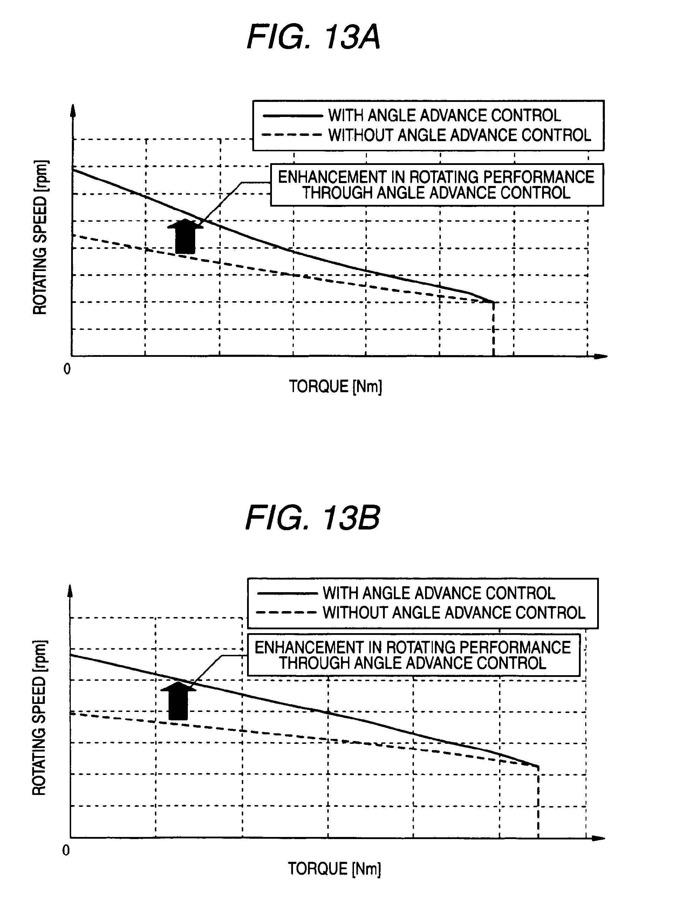

Fig. 13 is a characteristic chart showing the case in which an angle advance control is used for a motor having a pseudo rectangular wave induced electromotive force. Fig. 13A is a characteristic chart for a motor in which an interterminal induced electromotive force has a pseudo rectangular wave and Fig. 13B is a characteristic chart for a motor in which a coil interphase induced electromotive force has a pseudo rectangular wave.

As is apparent from the drawing, a rotating performance can be enhanced in the angle advance control through both of the motors.

In the embodiment, thus, a three-phase brushless motor containing a harmonic component other than a fundamental wave component in an induced electromotive force is applied and a phase current of the motor is controlled. A content of the harmonic component of the brushless motor is adjusted by a skew angle of at least one of a rotor and a stator which are components of the brushless motor. Therefore, it is possible to optimally set the motor, for example, to enhance a torque performance of the motor or to hold a cogging torque to be equal to or smaller than a predetermined value. Moreover, the induced electromotive force containing the harmonic component is used to calculate a phase current command value and to supply a phase current to the motor based thereon. Consequently, it is possible to prevent a torque ripple from being caused by a harmonic induced electromotive force.

Moreover, a skew angle is set to be smaller than the skew angle at which an induced electromotive force has a fundamental wave. Therefore, it is possible to raise a primary component of a coil interphase induced electromotive force as compared with a sine wave induced electromotive force, thereby increasing an induced electromotive force constant (a motor torque constant). Thus, it is possible to reliably enhance the torque performance of the motor.

Furthermore, the skew angle is set to be a skew angle at which a cogging torque is equal to or smaller than a target value. Therefore, it is possible to reduce a noise and a vibration in the motor as greatly as possible within such a range as to disregard a noise, a vibration and a feeling for an EPS.

Moreover, the skew angle is set to be a skew angle at which a harmonic component having a higher order than a seventh order is not contained in an induced electromotive force. Therefore, it is possible to easily generate a current waveform for preventing a torque ripple from being caused by a harmonic induced electromotive force, thereby suppressing the torque ripple effectively.

Furthermore, there is carried out a angle advance control for determining a phase current command value waveform in order to enhance a rotating performance of a motor for an induced electromotive force waveform. Therefore, it is possible to implement a high rotation following property, thereby enhancing an EPS performance.

Moreover, it is possible to obtain advantages that the number of windings of a coil can be increased and a torque constant can be increased corresponding to an increase in a motor output and a motor conformation can be reduced corresponding to the increase in the torque, a reduction in a size and a weight in the motor can be implemented, and a vehicle loading property of the EPS can be enhanced.

Although the description has been given to the case in which the skew angle β is set to be the angle at which the harmonic component having the higher order than the seventh order is not contained in the induced electromotive force as greatly as possible in the embodiment, this is not restricted in the case in which it is possible to implement a current waveform for suppressing a torque ripple through a responsiveness of a current control or a responsiveness of an FET or a microcomputer.

While the description has been given to the case in which the d-axis target current $i_d(\theta e)$ and the q-axis target current iq($\theta e$) are fed into the voltage control portion 40 after they are converted into the three-phase target currents Iu*, Ivd* and Iwd* through the two-phase / three-phase converting portion 37 in the embodiment, moreover, this is not restricted but it is also possible to employ a structure in which the two-phase / three-phase converting portion 37 is omitted, the motor currents Idu, Idv and Idw detected by the current detecting circuit 22 are supplied to a three-phase / two-phase converting portion in place thereof and are converted into a d-axis detection current and a q-axis detection current, and a deviation between the d-axis detection current and the q-axis detection current thus converted and the d-axis target current $i_d(\theta e)$ and the q-axis target current $i_q(\theta e)$ which are calculated by the target current setting portion 30 is calculated, and the deviation is then subjected to a two-phase / three-phase conversion to calculate a phase control voltage.

Although the description has been given to the case in which the invention is applied to the electric power steering apparatus in the embodiment, furthermore, this is not restricted but the invention can be applied to an apparatus in which a three-phase brushless motor such as an on-vehicle electric apparatus, for example, an dynamo-electric brake apparatus or other electric apparatuses is applied.

While the description has been given to the case in which the three-phase brushless motor is applied in the embodiment, moreover, it is also possible to apply a brushless motor having at least three phases.

The application is based on Japanese Patent Application (P.2006-208141) filed on July 31, 2006, the contents of which are incorporated herein by reference.

**Claims**

1. An electric power steering apparatus comprising:

   a brushless motor having at least three phases;
   a current control unit which supplies a phase current to drive the brushless motor; and
   a current command value setting unit which determines a command value of the phase current,
   wherein the brushless motor has an induced electromotive force waveform containing a harmonic component other than a fundamental wave component.

2. The electric power steering apparatus according to claim 1, wherein a content of the harmonic component of the brushless motor is set based on a skew angle of at least one of a rotor and a stator which are components of the brushless motor.

3. The electric power steering apparatus according to claim 2, wherein the skew angle is set to be smaller than a skew angle at which the induced electromotive force is the fundamental wave.

4. The electric power steering apparatus according to claim 2, wherein the skew angle is set to be a skew angle at which a cogging torque has a predetermined value or less.

**5.** The electric power steering apparatus according to claim 2, wherein the skew angle is set to be a skew angle at which the harmonic component having an order which is equal to or lower than a seventh order is contained in the induced electromotive force.

**6.** The electric power steering apparatus according to claim 1, wherein the current command value setting unit utilizes the induced electromotive force of the brushless motor to output each phase current command value.

**7.** The electric power steering apparatus according to claim 1, wherein the current command value setting unit includes angle advance control unit which carries out a angle advance control to determine a phase current command value waveform in order to enhance a motor rotating performance with respect to the induced electromotive force waveform.

# FIG. 1

*FIG. 2*

EP 2 048 061 A1

# FIG. 3

EP 2 048 061 A1

# FIG. 4

EP 2 048 061 A1

## FIG. 5

35 — INDUCED ELECTROMOTIVE FORCE MODEL → E. M. F

13 — ELECTRICAL ANGLE → $\theta e$

31 — $I_{REF}$ (TORQUE COMMAND) → $I_{ref}$

**36**
q-AXIS CALCULATION OF CONSTANT TORQUE EQUATION

$$i_q(\theta e) = \cfrac{\dfrac{2}{3}K_t i_{ref}\dfrac{1}{p}\omega_e - \omega_e e_d(\theta e)i_d(\theta e)}{\omega_e e_q(\theta e)}$$

→ $I_q(\theta e)$

$I_d(\theta e)$

**34a**
d-AXIS DC MAP
$I_{dDC}$ vs $I_{ref}$

$I_{ref}$ → → $I_{dDC}$

**34c**
CALCULATION OF PSEUDO q-AXIS CURRENT
$$i_q(\theta e)' = |I_{qDC} + i_{qc}\cos(6\theta e) - i_{qs}\sin(6\theta e)|$$

$I_q(\theta e)'$

**34d**
OPPOSITE PHASE OUTPUT OF AMPLITUDE COMPONENT
$$i_d(\theta e) = -i_{qc}\cos(6\theta e) + i_{qs}\sin(6\theta e)$$

$I_d(\theta e)'$

**34b**
d-AXIS AMPLITUDE MAP
$I_{dAmp}$ vs $I_{ref}$

$I_{ref}$ → → $I_{dAmp}$

$I_{dDC}$

**34e**
d-AXIS CURRENT CALCULATION
$$i_d(\theta e) = I_{dDC} + I_{dAmp}(i_d(\theta e)')$$

→ $I_d(\theta e)$

**37**
TWO-PHASE / THREE-PHASE CONVERTING PORTION

18

## FIG. 6

## FIG. 7

## FIG. 8

## FIG. 9

ALTHOUGH AN INDUCED ELECTROMOTIVE
FORCE WAVEFORM IS A SINE WAVE, A
COGGING TORQUE IS NOT A MINIMUM

ALTHOUGH A SKEW ANGLE HAS A
MINIMUM COGGING TORQUE, AN
INDUCED ELECTROMOTIVE FORCE
CONTAINS A HARMONIC COMPONENT

COGGING TORQUE / HARMONIC CONTENT

Tc1

0       $\beta$1    $\beta$2    $\beta$3

SKEW ANGLE $\beta$

——— COGGING TORQUE
—·— FIFTH-ORDER HARMONIC CONTENT
----- SEVENTH-ORDER HARMONIC CONTENT

## FIG. 10

········ SINE WAVE INDUCED ELECTROMOTIVE FORCE
—·— PSEUDO RECTANGULAR WAVE INDUCED ELECTROMOTIVE FORCE
——— PRIMARY COMPONENT IN PSEUDO RECTANGULAR WAVE

INDUCED ELECTROMOTIVE FORCE VALUE [V]

RISE IN PRIMARY COMPONENT
(SINE WAVE COMPONENT)
WITH RESPECT TO SINE WAVE

PRIMARY COMPONENT IN
PSEUDO RECTANGULAR WAVE

PSEUDO
RECTANGULAR
WAVE INDUCED
ELECTROMOTIVE
FORCE

SINE WAVE INDUCED
ELECTROMOTIVE FORCE

1.2

1

0.8

0.6

0.4

0.2

0

0   20   40   60   80   100   120   140   160   180

MOTOR ELECTRICAL ANGLE [deg]

FIG. 11

21

# FIG. 12

- - - - - SINE WAVE INDUCED ELECTROMOTIVE FORCE MOTOR
———— INTERTERMINAL INDUCED ELECTROMOTIVE
FORCE HAVING PSEUDO RECTANGULAR WAVE
—·—·— COIL INTERPHASE INDUCED ELECTROMOTIVE
FORCE HAVING PSEUDO RECTANGULAR WAVE

ROTATING SPEED [rpm]

ENHANCEMENT IN
TORQUE PERFORMANCE

0

TORQUE [Nm]

## FIG. 13A

## FIG. 13B

<table>
<tr><td colspan="2" align="center">INTERNATIONAL SEARCH REPORT</td><td colspan="2">International application No.<br>PCT/JP2007/062812</td></tr>
</table>

**A. CLASSIFICATION OF SUBJECT MATTER**
*B62D6/00*(2006.01)i, *B62D5/04*(2006.01)i, *H02K1/06*(2006.01)i, *H02P6/10*(2006.01)i, *B62D101/00*(2006.01)n, *B62D113/00*(2006.01)n, *B62D119/00*(2006.01)n

According to International Patent Classification (IPC) or to both national classification and IPC

**B. FIELDS SEARCHED**

Minimum documentation searched (classification system followed by classification symbols)
B62D6/00, B62D5/04, H02K1/06, H02P6/10, B62D101/00, B62D113/00, B62D119/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2006-158198 A  (NSK Ltd.),<br>15 June, 2006 (15.06.06),<br>Par. Nos. [0024] to [0031]<br>& US 2006/0071628 A1    & EP 1587210 A1<br>& WO 2004/049554 A1 | 1,6,7<br>2-5 |
| Y | JP 2006-174692 A  (NIDEC Corp.),<br>29 June, 2006 (29.06.06),<br>Par. Nos. [0010], [0032], [0042], [0062] to<br>[0067]<br>& US 2006/0192511 A1 | 2-5 |

☐ Further documents are listed in the continuation of Box C.   ☐ See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>14 September, 2007 (14.09.07) | Date of mailing of the international search report<br>25 September, 2007 (25.09.07) |
|---|---|
| Name and mailing address of the ISA/<br>Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005020930 A
- JP 2004201487 A
- JP 2006158198 A
- JP P2006208141 B